# EUROPEAN PATENT APPLICATION

(11) **EP 1 887 486 A1**
(43) Date of publication of application: **13.02.2008**
(21) Application number: 07113404.3
(22) Date of filing: 30.07.2007
(51) Int. Cl.: G06F 17/50

(54) **Power generation mix forecasting modeling method**

(30) Priority: 04.08.2006 US 498861
(71) Applicant: General Electric Company, Schenectady, NY 12345 (US)
(72) Inventor: Boaz, Jeffery L., Wilmington, NC 28411-2819 (US); Spears, Brian Forrest, Hampstead, NC 28443 (US)
(74) Representative: Bedford, Grant Richard

(57) **Abstract**

A method for predicting an optimal mixture of power generation plant (12) types using a forecasting model (20) including: collecting (22) financial data (24) of various costs attributable to each of a plurality of power generation plant types; assigning probability distributions (26) to the various costs; generating probability distributions (32) of the projected costs for each of the power generation plant types by using the probability distributions for the various costs to project costs attributable to each of the power generation plant types expected to occur over a predetermined period of time; applying at least one modifier (30) to the projected costs, wherein the modifier accounts for a soft factor that influences the cost of at least one of the power generation plant types, and projecting the optimal mixture (36) of power plant types based on a Bayesian combination analysis of the modified projected costs of the power plant types.

## Description

The invention relates generally to the field of forecasting power generation demands and, in particular, for forecasting electrical power generation demands on various types of power sources.

Electrical power utilities may generate power from various sources such as nuclear power plants, coal powered plants, gas turbines, hydrodynamic plants and wind turbines. Each source of electrical power may have unique power generation costs and capacity, as well as other benefits and disadvantages associated with generating electrical power. These various sources of power may be connected to a common power utility grid that distributes electrical power to a large geographic area of residential and commercial energy users. The demand for electrical power from all of the users on the power grid may be used to determine a total power demand from all power sources. Another determination is needed to allocate the total power demand among the various power sources. The power generated from the sources should generally match the power demand on the grid.

There is a long felt need for forecasting tools to predict long range power requirements and the market for specific types of power plants. Forecasting tools have been used to analyze the market for new power plants and new power plant technologies. Conventional forecasting tools have tended to use various mathematical models to analyze the economics of power plants and mimic market behavior. Examples of mathematical models include: diffusion models (e.g., Gompertz, Fisher-Pry, Bass); learning models (e.g., Dirichlet, Artificial Neural Networks); Regression models (e.g., trending or multivariate models based on historical data); prediction markets (e.g. Wolfers and Zitzewitz (2004) "Prediction Markets" Journal of Economic Perspectives, 18, 107-126), and Bayesian Statistics (e.g. Allenby, Rossi, McCulloch "Hierarchical Bayes Models: A Practitioners Guide" (Jan 2005) SSRN http://ssrn.com/abstract=655541). Conventional forecasting tools do not effectively account for soft cost factors, such as government regulation or public opinion of power sources.

According to a first aspect of the present invention, a method for predicting an optimal mixture of power generation plant types has been developed using a forecasting model including: collecting financial data of estimated costs of each of a plurality of power generation plant types; assigning probability distributions to the estimated costs; projecting the estimated costs over a period of time for each type of power generation plant to generate probability distributions of estimated costs for each type of power plant; applying modifiers to the economic evaluations that account for factors such as public opinion and political climate that directly or indirectly influence the cost of a given technology, and projecting a mixture of future power plant type based on a Bayesian combination analysis.

The method may include storing the financial data for each power generation technology in a pro forma financial statement in a computer spreadsheet. Probability distributions of estimated costs in the pro forma may be combined through a Monte Carlo analysis to develop a probability distribution of the overall cost of electricity over a defined evaluation period. Further, the non-quantifiable factors include risks of governmental regulations and public reaction to each power plant type. This projected generation mixture by the plurality of power generation types fills the estimated base load energy demand.

Various aspects and embodiments of the present invention will now be described in connection with the accompanying drawings, in which:
FIGURE 1 is a schematic illustration of an electrical power grid providing power to various consumers and distributing power produced by various types of power plants.
FIGURE 2 is high level flow chart providing a general overview of a novel process determining an optimal mixture of types of power generation plants to produce power for a forecasted demand.
FIGURE 3 is an exemplary chart of a pro-forma cash flow analysis for major base load electricity generation power plants.
FIGURE 4 is an exemplary Bayesian Network model to analyze economic factors presented in the pro-forma cash flow analysis.
FIGURE 5 is a probabilistic analysis model applied to the output of the Bayesian Network model.
FIGURE 6 is a chart showing the overall demand forecast.
FIGURE 7 is a chart of potential power mix demand.

A power generation mixture forecasting modeling system and method has been developed to assist in forecasting the market for various power generation technologies.

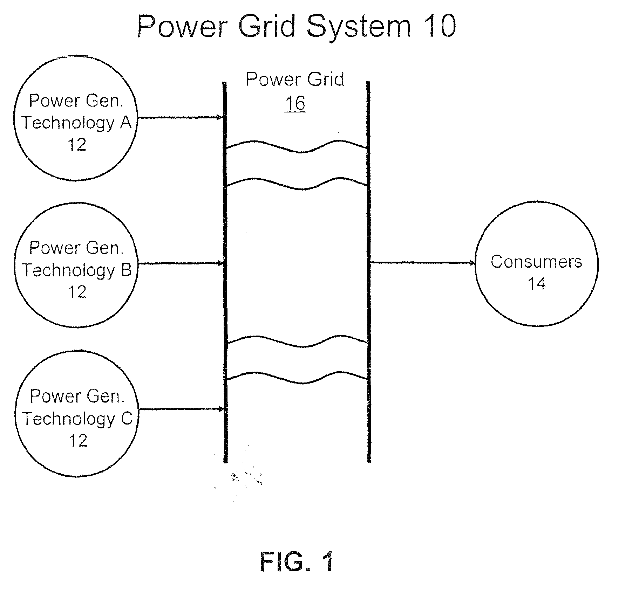

FIGURE 1 is a diagram of a power distribution system 10 that includes various types of power generation plants 12 (Power Generation Technologies A, B and C), various power consumers 14, and a power grid 16 to distribute the generated power to the consumers. The types of power generation plants may include: nuclear power, coal, gas and oil fired boilers, simple cycle and combined cycle gas turbines, wind turbines, hydrodynamic power generators or other fossil fuel fired combustion engines. The power generation plants produce electricity which is in turn distributed to consumers over the electrical grid.

Long term forecasts of the amount of power to be generated by each power plant should not assume that the cost of power, demand for power and other variables will remain constant. Over the course of time, e.g., a few months, years or even decades, the cost of fuel varies, the capacities of existing power plant changes as they add new power generation facilities and retire out-dated facilities, new power plants come online to the grid, government regulations on power plants change and other factors vary that affect the demand for power. These variables are expected to change over time and the amount of change is not entirely predictable. The potential for future changes in the variables that affect the demand for power create uncertainty in the market for power plants.

In deciding to invest in capacity for constructing new power generation facilities, it is helpful for suppliers to know what other types of power plants utilities plan to place on the grid. A utility's analysis to invest in a particular power generation technology depends on a variety of factors including, but not limited to, capital costs, operation and maintenance (O&M) costs, financing costs, fuel costs, government policy and public opinion. Accordingly, forecasting the size of the market available to power plant suppliers should consider the factors a utility would use to select from among the different types of power generation plants available to produce power in the future.

There is a need to determine the costs, capacity, benefits and disadvantages of each type of power generation plant. Knowing the various forecasted costs for generating power and the capacities of various types of power plants would be useful in predicting the market for new power plants and facilities. Further, the forecasted costs should preferably be considered in allocating the amount of power to be produced by each source for the power grid.

A technique has been developed to predict a probabilistic mixture of the types of power plants for forecasted power demands. The technique involves a mathematical model that receives economic data regarding power plant types and applies to the data various analyses to evaluate the costs, risks and probabilities of each type of power generation plant. The technical effect of this technique is to generate a proposed mixture of types of power plants that is predicted to provide an economically optimal blend of power plants to meet a predicted collective base load. The technique is suitable for baseload demand forecasts and less so for peaking and intermediate demand forecasts.

The technique disclosed herein for predicting an optimal mixture of power generation plant types for a base load involves a forecasting model that combines four analytical elements. These elements include: a Monte Carlo analysis of pro forma financial data of the costs associated with the different types of power generation plants; a macro economic power generation demand forecast; a Bayesian Network analysis of the output of the Monte Carlo analysis, and statistical combination of the outputs of the macro economic forecast and the Bayesian analysis to determine a forecasted distribution of power generation technologies to meet a predicted base load.

The technique may be embodied in a computer model, e.g., electronic spread sheet, that receives the input data regarding costs and demand for electricity, cost and soft factor variables and probability distributions regarding the variables. The model generates projections for the cost of electricity for various perturbations of the variables and determines probability distributions for the projected costs of each technology. Soft factors are conditions that directly or indirectly affect the costs of a power source technology, but which are not amenable to deterministic quantification. The probability distributions, as modified with the soft factors, are applied to project estimated usage of the different types of power plants. Each estimate is made with different cost estimates. The costs are varied in accordance with the probability distributions. The projected estimated usage of different power plants are analyzed to determine optimal mixes of power plant types. These power mixes can be used to predict the overall market for new power plants.

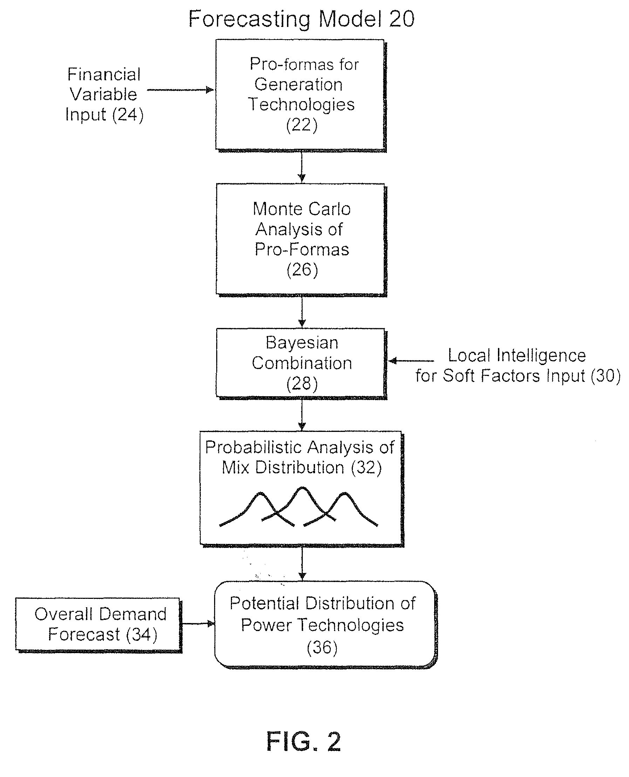

FIGURE 2 is a high level flow chart showing a forecasting model 20 for predicting an optimal mixture of base load power generation plants. The forecasting model may be used to, for example, evaluate demand for power plants five, ten, fifteen years or more into the future. The model applies assumptions and predictions as to the demand for power, cost of power generated by each of several different types of power points and other factors that affect power demand and power plants. These assumptions and predictions are made over a certain period, such as from present to a time into the future, e.g., 5, 10, 15 or 20 years. The model projects a probability distribution of the cost of electricity (COE) for a defined period. Using the projected COE, the model may be used to, for example, determine an optimal mixture of types of power generation plants to provide electricity to the grid.

In step 22, pro forma financial data is collected and organized to evaluate the costs associated with different types of power generation technology. In addition, the pro forma analysis (step 22) receives estimates 24 regarding cost variables that affect the cost of power, such as the predicted costs for fuel, financing costs, O&M costs and capital costs.

In step 26, a Monte Carlo statistical analysis is performed on the pro forma financial data to determine the cost probabilities for each of the various types of power generation plants. The Monte Carlo analysis generates cost of electricity (COE) probabilities for each type of power plant. The probabilistic data generated by the Monto Carlo analysis is further processed using a Bayesian Combination analysis in step 28.

The Bayesian Combination analysis considers soft factors 30 as inputs to account for non-quantifiable factors that might affect the cost of power and the capability of power plants. These soft factors may include the likelihood that: local governments will permit construction of new power plants, government regulations on the production of power, such as emissions regulations, and global political concerns that might inhibit the purchasing of sufficient amounts of oil for fuel.

Soft factors are considered soft because there is no simple way to reliably assign a number value to their future effect. The magnitude and distributions of the soft factors can be collected and consolidated from multiple participants to avoid a single opinion skewing data unreliably (Wolfers and Zitzewitz (2004) "Prediction Markets" Journal of Economic Perspectives, 18, 107-126). An electronic survey or prediction market can be an effective method for collecting and consolidating this information. Using Bayesian statistics, the probability distribution of the cost model can be combined with the soft factors.

The output of the Bayesian analysis is a series of probability distributions 32 of the cost of electricity for the various power plant types adjusted by soft factors. Using these distributions and a forecast for the collective future demand for power in a region, 34 a potential power plant technology distribution 36 may be generated that identifies an optimal distribution of power plant types needed to satisfy the future demand. This distribution 36 may be used to forecast the market for various power plant technologies over a given period of time.

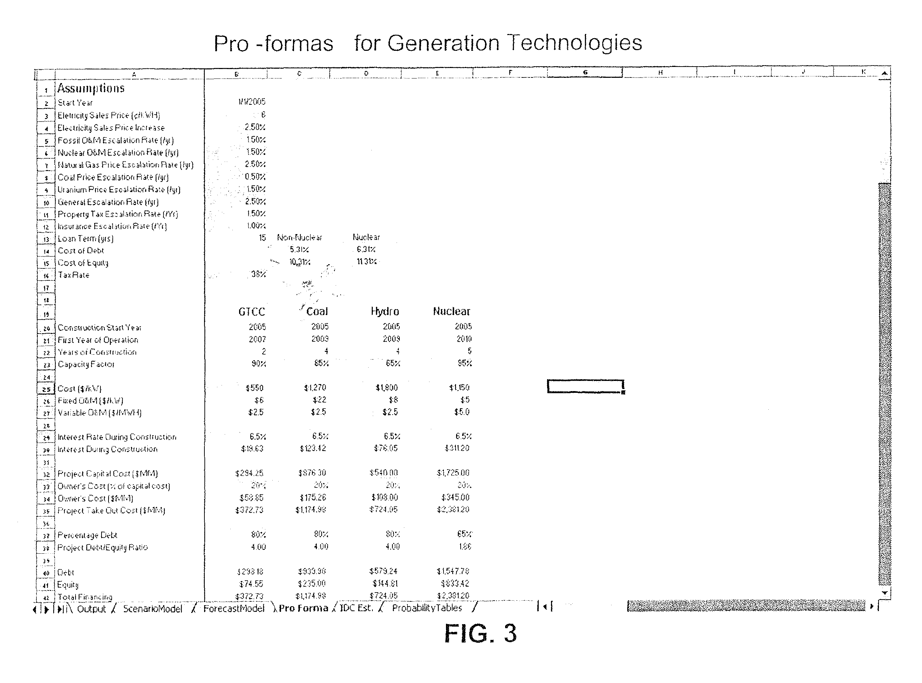

FIGURE 3 illustrates an exemplary pro-forma cash flow analysis of the predicted costs, at a predefined point in the future, of electrical energy for various types of power generation plants. Pro-forma cash flow analyses are prepared for the major base load electricity technologies that are predicted to be available to produce energy for the grid at the time period in the future being evaluated. (e.g. Harry G. Stoll. Least-Cost Electric utility Planning. Wiley-Interscience, 1989)

A pro-forma cash flow analysis is a conventional and standard tool used by planners of energy production plants to estimated future costs of energy production. This analysis projects the costs to produce electricity based on assumptions in annual costs. Each of the assumptions may have an associated probability distribution.

A computer may be used to project costs year-by-year into the future. For example, a computer spreadsheet program (e.g. Microsoft Excel) may be used to project costs for the pro-forma cash flow analysis.

The pro-forma analysis may receive inputs such as assumptions for a specific start year, operation and maintenance expenses (O&M) for each technology considered, fuel price, general annual escalation rate, cost of debt and equity for each technology, time required for construction, yard costs, efficiency by technology, interest during construction and operating capacity factor. The capacity factor is the average amount of energy generated by a plant in a particular period divided by the total amount that could be generated if the plant operated at 100% power for the entire period.

After the inputs and probability distributions have been entered in the computer, the spread sheet calculates the costs for each of the plants. The variables of the spread sheet can be permutated based on their respective probability distributions to develop a distribution of the Cost of Electricity (COE) for each technology based on various settings of the variables. The variables are permutated based on their respective probability distributions using a Monte Carlo analysis (a software package such as Crystal Ball from Decisioneering of Denver, Colorado can be used to conduct the Monte Carlo analysis). A fixed number of trials are run and costs of electricity are determined and stored in the spreadsheet. The stored projections are used to develop a probability distribution.

The output of the Monte Carlo analysis in the pro forma is further analyzed using Bayesian statistical analysis. A Bayesian Network model is used to combine the probability distribution for cost from the pro-forma, with soft factors such as current or potential legislation, public perception, security risk, and waste policy.

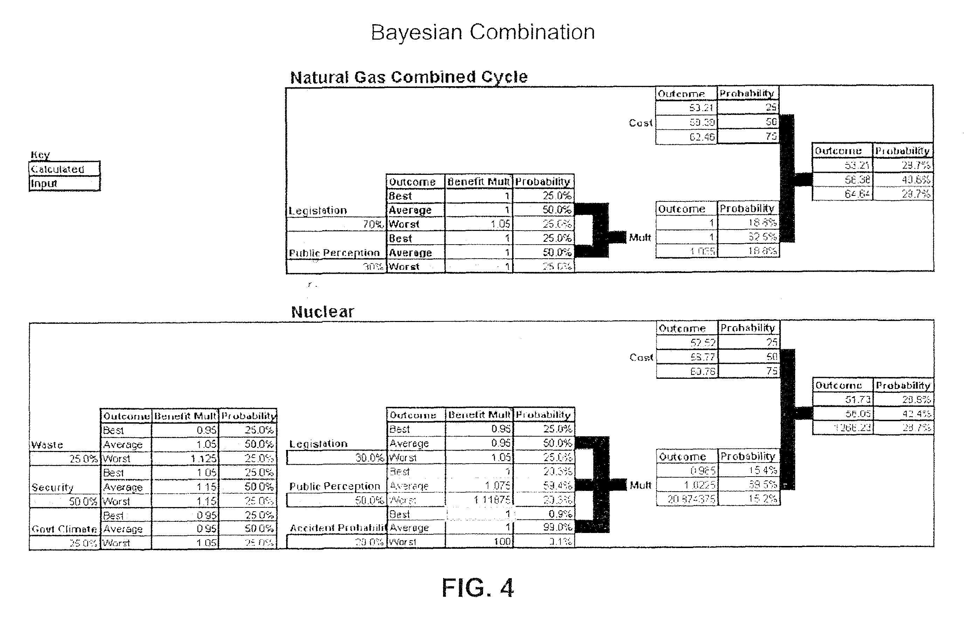

FIGURE 4 is an electronic spread sheet output showing an exemplary Bayesian network model. This model adjusts the probability distribution output of the Monte Carlo analysis for the cost of electricity by the soft factor modifiers. This is done through Bayesian statistics to create a weighted sociological/political/economic cost for each base load power plant technology.

In the example shown in FIGURE 4, each soft factor has a multiplier and probability assigned to the best, average and worst expected outcomes. These are entered for every base load technology (coal, gas, nuclear and hydro). Similarly, the cost distribution from the Monte Carlo analysis is entered into the spreadsheet. As shown, the costs for each quartile are entered with probabilities for each outcome (e.g. 0.25 for upper and lower quartiles and 0.5 for average).

Based on a hypothesis that the market share or mix for each technology is based on the probability that adjusted economics of each technology is most favorable, a market share or mix percentage can be calculated. Essentially, the hypothesis states that the probability that a particular technology is favored will approach the market share of that technology.

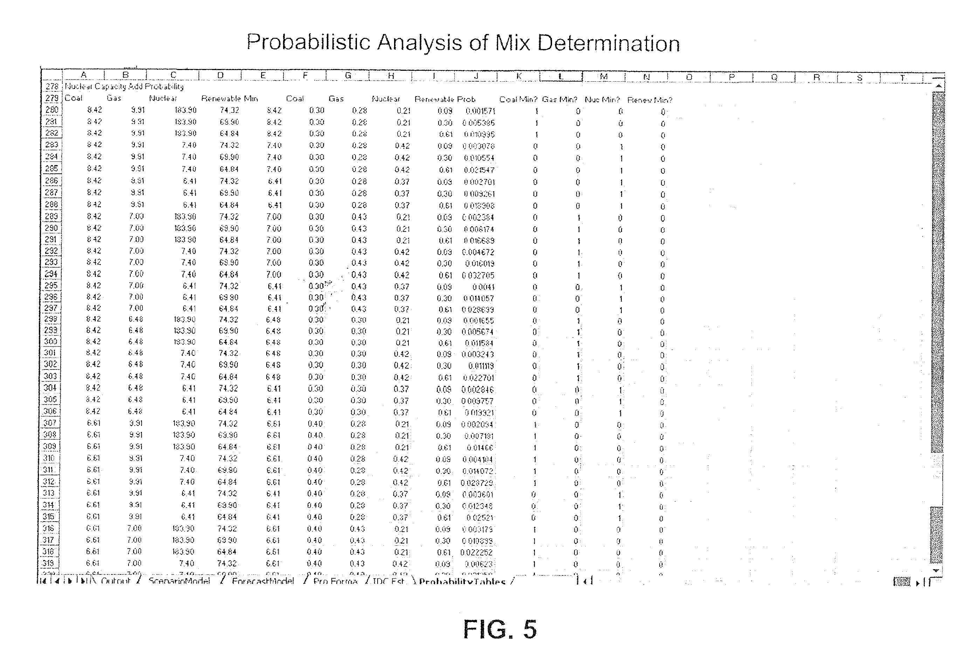

FIGURE 5 is a chart illustrating an exemplary output of the power plant mix determination. The output of the Bayesian analysis is a probability distribution for each base load technology. Using these distributions, specific scenarios may exist where each technology is favored by a particular market.

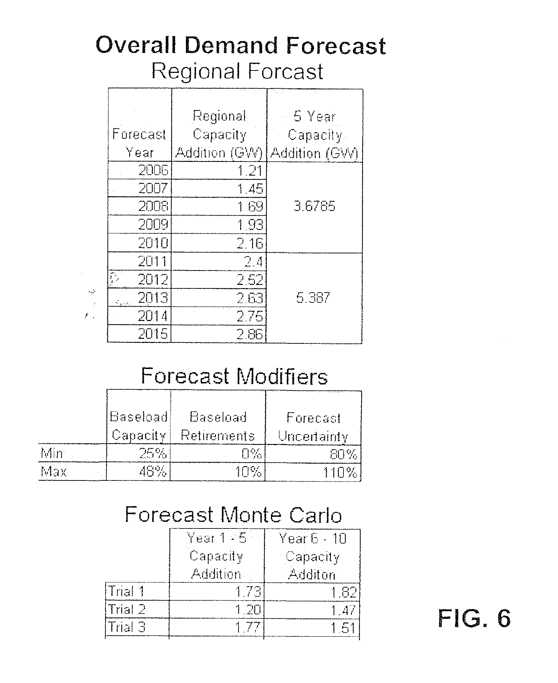

FIGURE 6 is a chart of the overall base load forecast. Overall electricity demand is obtained from a third party source (EIA, etc) and corrections are made to account for the fraction of the forecast which will be base load only generation, retirements from the current base load generation mix and uncertainty in the forecast. The overall forecast is grouped into a certain number of years (e.g. 1, 2, 5, or 10 years) and Monte Carlo analysis is used to develop the best, worst and most likely capacity additions for each block of years.

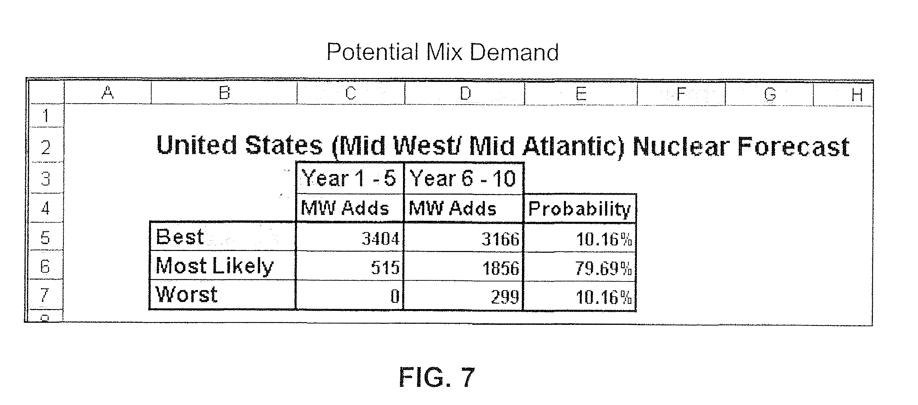

FIGURE 7 is a chart of a projected optimal power mix forecast for nuclear power. This chart provides an exemplary estimate of the optimal nuclear power generation capability for the periods of 1 to 5 years in the future and for the period of 6 to 10 years in the future. The optimal mix can be projected for various types of power generation plant types and different periods of time.

While the invention has been described in connection with what is presently considered to be the most practical and preferred embodiment, it is to be understood that the invention is not to be limited to the disclosed embodiment, but on the contrary, is intended to cover various modifications and equivalent arrangements included within the spirit and scope of the appended claims.

## Claims

1. A method for predicting an optimal mixture of power generation plant (12) types using a forecasting model (20) comprising:
collecting (22) financial data (24) of various costs attributable to each of a plurality of power generation plant types;
assigning probability distributions (26) to the various costs;
generating probability distributions (32) of the projected costs for each of the power generation plant types by using the probability distributions for the various costs to project costs attributable to each of the power generation plant types expected to occur over a predetermined period of time;
applying at least one modifier (30) to the projected costs, wherein the modifier accounts for a soft factor that influences the cost of at least one of the power generation plant types, and
projecting the optimal mixture (36) of power plant types based on a Bayesian combination analysis of the modified projected costs of the power plant types.

2. The method of claim 1 wherein collecting the financial data for each of the power generation plant types includes storing the data in a pro forma financial statement (22) executed in a computer spreadsheet.

3. The method of claim 2 wherein the probability distributions (26) of costs in the pro forma statement (22) is combined to develop a probability distribution (32) of overall electricity costs for each power plant type over a defined evaluation period.

4. The method of any preceding claim wherein the probability distributions are combined through a Monte Carlo analysis (26) to develop a probability distribution of overall costs of electricity over a defined evaluation period.

5. The method of any preceding claim wherein the costs (24) of power generation plant types are estimated costs of predicted future operating costs.

6. The method of any preceding claim wherein the soft factor (30) is at least one of a public opinion factor and political climate factor.

7. The method of any preceding claim wherein the soft factor (30) indirectly influences the cost of the at least one of the power generation types.

8. The method of claim 1 wherein the soft factor (30) is a non-quantifiable factor.

9. The method of any preceding claim wherein the projected mixture (36) of power plant types includes a mixture of nuclear power, coal-fired and oil-fired power plants.

10. A method as in any preceding claim wherein the financial data (24) is collected and stored in a pro forma financial data spread sheet.
